Europäisches Patentamt

European Patent Office

Office européen des brevets

(19)

(11) Numéro de publication : **0 334 713 B1**

(12) ## FASCICULE DE BREVET EUROPEEN

(45) Date de publication du fascicule du brevet :
**08.07.92 Bulletin 92/28**

(51) Int. Cl.$^5$ : **C01G 25/02**

(21) Numéro de dépôt : **89400697.2**

(22) Date de dépôt : **14.03.89**

(54) **Procédé de fabrication d'oxyde de zirconium hydraté à partir d'oxyde de zirconium cristallisé granulaire.**

(30) Priorité : **22.03.88 FR 8803681**

(43) Date de publication de la demande :
**27.09.89 Bulletin 89/39**

(45) Mention de la délivrance du brevet :
**08.07.92 Bulletin 92/28**

(84) Etats contractants désignés :
**DE ES FR GB IT**

(56) Documents cités :
**FR-A- 714 284**
**FR-A- 1 602 548**
**US-A- 3 811 907**
**US-A- 4 395 384**
**CHEMICAL ABSTRACTS, vol. 98, no. 8, 1983,
page 137, résumé no. 56501e, Columbus, Ohio,
US; D.J. MacDONALD et al.: "Method forproducing zirconyl sulfate solution from zircon
sand", & REP. INVEST.-U. S., BUR. MINES
1982, RI 8718, 13 PP.**

(73) Titulaire : **SOCIETE EUROPEENNE DES
PRODUITS REFRACTAIRES
Les Miroirs 18, Avenue d'Alsace
F-92400 Courbevoie (FR)**

(72) Inventeur : **Recasens, Joseph
24 rue Saint Hubert
F-84700 Sorgues (FR)**
Inventeur : **Urffer, Daniel
5 rue Paul Signac
F-84130 Morieres-les-Avignons (FR)**
Inventeur : **Ferlanda, Pierre
Route de Carpentras
F-84130 Le Pontet (FR)**

(74) Mandataire : **Colas, Jean-Pierre et al
Cabinet de Boisse 37, avenue Franklin D.
Roosevelt
F-75008 Paris (FR)**

## Description

L'invention concerne un procédé de fabrication d'oxyde de zirconium hydraté à partir d'oxyde de zirconium cristallisé granulaire.

La fabrication d'oxydes de zirconium (également dénommés zircones ci-après) synthétiques purs et réactifs et de composés chimiques du zirconium en solution ou solubles dans divers milieux passe en général par la synthèse d'oxyde de zirconium hydraté. Il s'agit d'un composé formé de $ZrO_2$ et d'eau, en teneur variable, appelé parfois hydroxyde de zirconium bien que ne correspondant pas à la formule définie $Zr (OH)_4$.

Pour assurer de bonnes qualités de dispersibilité aux oxydes de zirconium, l'oxyde de zirconium hydraté précurseur doit avoir une forme granulaire.

Les procédé connus de fabrication d'oxyde de zirconium hydraté sont en général fondés sur la transformation du sable de zircon naturel, formé essentiellement de silicate de zirconium. Ils sont passés en revue dans l'article de F. Farnworth et coll. "The Production, Properties and Uses of Zirconium Chemicals", publié dans la publication spéciale de la Royal Society of Chemistry, N° 40, pages 248-284, (1981). Ces procédés qui visent à éliminer l'oxyde de silicium ont l'inconvénient de générer de nombreux sous-produits difficilement valorisables et de comporter un grand nombre d'étapes intermédiaires avant l'obtention de l'oxyde de zirconium hydraté, à un degré de pureté suffisant (impuretés totales inférieures à 3%).

Ainsi, le procédé de fabrication d'oxyde de zirconium hydraté pur le plus couramment employé est le suivant:

On opère un mélange de zircon naturel et d'hydroxyde de sodium solide suivi d'une cuisson, à une température généralement comprise entre 600 et 900°C. La réaction suivante est mise en jeu :

$$Zr\ SiO_4\ +\ 6\ NaOH \rightarrow Na_2\ ZrO_3\ +\ Na_4\ SiO_4$$

La réaction est en général incomplète. Des résidus de zircon non transformé (3 à 10%) subsistent dans le produit synthétisé. Leur élimination nécessite des opérations additionnelles.

Le mélange cuit est mis en réaction avec de l'eau (hydrolyse) ; la réaction suivante se produit alors

$$Na_2ZrO_3\ +\ Na_4SiO_4\ +\ (n+x)H_2O \rightarrow ZrO_2.\ x\ H_2O\ +\ 2\ NaOH\ +\ Na_4\ SiO_4\ +\ (n-1)H_2O$$

La zircone hydratée formée est en suspension dans une solution de silicate et d'hydroxyde de sodium. Elle est séparée par filtration. Ce composé a une grande surface spécifique. Il fixe de grandes quantités de sodium et de silicium par adsorption de la solution de silicate de sodium. Le produit filtré contient, en outre, les résidus solides de zircon non transformé. Par ce procédé, la zircone hydratée obtenue à ce stade est très impure (5 à 10% $SiO_2$, 2 à 8% $Na_2O$). Sa purification est effectuée par mise en solution dans un acide, l'acide chlorhydrique en général. On forme une solution d'oxychlorure de zirconium par ajout de deux moles d'HCl par mole de $ZrO_2$, dont on sépare les impuretés solides (zircon, silice) par filtration. Puis, on forme, par précipitation, un sulfate basique de zirconium solide en ajoutant de l'acide sulfurique à la solution d'oxychlorure de zirconium à raison de 0,5 à 0,8 mole de $H_2SO_4$ par mole de $ZrO_2$. Lors de cette précipitation, le sodium est éliminé dans la solution surnageante. Puis on convertit le sulfate basique de zirconium en zircone hydratée purifiée solide par mise en contact avec une solution alcaline, l'ammoniaque en général. Dans ce procédé usuel, on ne convertit pas la solution d'oxychlorure de zirconium directement en zircone hydratée, bien que cela soit chimiquement possible.

On obtiendrait, en effet, une zircone hydratée gélatineuse, difficilement manipulable et riche en chlore dans le cas du recours à des solutions concentrées économiquement viables. Le passage par le sulfate basique de zirconium assure une forme granulaire à la zircone hydratée, tel que cela est recherché en pratique. Cet oxyde hydraté contient en général des sulfates non extraits dans la dernière phase à raison de 0,3 à 5%. Ces sulfates peuvent présenter une gène à l'utilisation, leur dégagement entraînant la formation d'acides corrosifs en cas de chauffage de l'oxyde hydraté pur ou en mélange.

Il existe donc un besoin pour un procédé de fabrication d'oxyde de zirconium hydraté qui soit plus direct et plus économique à mettre en oeuvre.

L'invention vise à satisfaire un tel besoin et fournit un procédé de fabrication d'oxyde de zirconium hydraté qui permet :

– de limiter largement le nombre d'étapes intermédiaires, donc la complexité et le coût du procédé et des installations de production,

– de diminuer très largement, voire de supprimer, la consommation de réactifs,

– de façon induite par ces deux faits, de limiter en nombre et quantité les rejets difficilement ou non valorisables.

La présente invention concerne un procédé de préparation d'oxyde de zirconium hydraté à partir d'oxyde de zirconium (zircone) cristallisé granulaire obtenu par dissociation à haute température de zircon, éventuellement additionné d'oxyde de zirconium ou de silice, en oxyde de zirconium cristallisé et silice, suivie d'une attaque sélective de la silice par de l'hydroxyde de sodium en solution concentrée, caractérisé en ce qu'il comprend les étapes suivantes :

(1) faire réagir ledit oxyde de zirconium critallisé granulaire avec une proportion au moins stoechiométrique d'hydroxyde de sodium solide à une température de 550 à 1400°C pour former du zirconate de sodium,

(2) hydrolyser le zirconate de sodium avec de l'eau de façon à produire une suspension d'oxyde de zirconium hydraté solide dans une solution aqueuse d'hydroxyde de sodium,

(3) séparer la majeure partie de ladite solution aqueuse d'hydroxyde de sodium de l'oxyde de zirconium hydraté,

(4) traiter l'oxyde de zirconium hydraté obtenu en (3), qui contient de l'hydroxyde de sodium résiduel, avec une solution aqueuse d'un sel d'ammonium d'un acide fort de manière à produire une base faible et un sel de sodium, et neutraliser, au fur et à mesure de sa formation, la base faible formée avec un acide fort, et

(5) séparer, laver à l'eau, puis essorer l'oxyde de zirconium hydraté purifié résultant de manière à obtenir ce dernier sous forme d'un solide granulaire, humide, dispersable dans l'eau.

Il est à noter que, bien que l'on ait défini l'invention eu égard à l'emploi d'hydroxyde de sodium comme agent alcalin, on pourrait utiliser, à la place de ce dernier, de l'hydroxyde de potassium ou de lithium. l'emploi d'hydroxyde de sodium est toutefois préféré en raison de sa disponibilité et de son moindre coût.

L'oxyde de zirconium (ou zircone) cristallisé granulaire utilisé comme matière de départ est un produit appelé zircone thermique disponible dans le commerce. Sa fabrication industrielle est bien connue et décrite dans divers brevets, par exemple dans US-A-3 749 763, US-A-3 661 764 (dissociation effectuée à l'aide d'un chalumeau à plasma), US-A-3 993 434 (dissociation effectuée dans un four à paroi fluide), FR-A-2 554 439 et US-A-2 924 533 (dissociation effectuée dans un four à arc électrique), et US-A-3 811 907. Typiquement, la zircone thermique contient les impuretés suivantes, en % en poids par rapport au poids de zircone :

$$SiO_2 \quad = 0,10 \text{ à } 0,70\%, \text{ habituellement environ } 0,45\%$$

$$Na_2O \quad = 0,02 \text{ à } 0,30\%, \text{ habituellement environ } 0,15\%$$

$$Al_2O_3 \quad = 0,05 \text{ à } 0,15\%, \text{ habituellement environ } 0,10\%$$

$$TiO_2 \quad = 0,05 \text{ à } 0,25\%, \text{ habituellement environ } 0,10\%$$

$$Fe_2O_3 \quad = 0,02 \text{ à } 0,10\%, \text{ habituellement environ } 0,04\%$$

$$CaO \quad \sim 0,05\%$$

$$MgO \quad \sim 0,01\%$$

$$P_2O_5 \quad \sim 0,03\%$$

Sa granulométrie moyenne dépend de la microstructure des granulés de zircon dissocié. Elle peut varier entre 0,1 et 15µm. Elle est en général de 2 à 5 µm. La surface spécifique de cet oxyde de zirconium pulvérulent va, selon sa granulométrie, de 0,8 à 8 m²/g, la valeur moyenne étant de 3 m²/g. La poudre d'oxyde a une forme cristalline essentiellement monoclinique. Pour les oxydes les plus fins, la phase quadratique métastable peut être présente à des taux jusqu'à 15%.

Cet oxyde pulvérulent est insoluble dans la plupart des réactifs. De plus, sa faible surface spécifique ne permet pas de la considérer comme réactif dans de nombreuses applications, en particulier dans la synthèse de matières céramiques par réaction solide-solide.

Dans l'étape (1), cet oxyde thermique est mélangé à de l'hydroxyde de sodium solide. Le rapport pondéral $NaOH/ZrO_2$ minimal doit correspondre au moins à la quantité stoechiométrique pour la formation du composé zirconate de sodium $Na_2ZrO_3$, soit une valeur d'au moins environ 0,65. La réaction mise en jeu s'écrit :

$$2NaOH + ZrO_2 \rightarrow Na_2ZrO_3 + H_2O$$

Il est préférable d'utiliser un léger excès de NaOH afin de favoriser la réaction de formation, soit une valeur dudit rapport de 0,70 à 0,85. Le mélange pulvérulent est cuit à une température minimale de 550°C, de préférence de 850 à 1400°C, avantageusement de l'ordre de 950°C, pendant une durée suffisante pour permettre la formation de zirconate de sodium avec un rendement de conversion de la zircone d'au moins 95%.

Le composé ainsi obtenu, le zirconate de sodium est un solide blanc, friable et avide d'eau. Afin de préparer la zircone hydratée, il est mis en réaction (étape (2)) avec de l'eau (hydrolyse), à une température de 30 à 90°C, de préférence d'environ 60°C. La durée d'hydrolyse est de 10 à 75 minutes, de préférence d'environ 30 minutes, en réacteur agité. La réaction suivante se produit :

$$Na_2ZrO_3 + (n+x)H_2O \rightarrow ZrO_2 \cdot xH_2O + 2\,NaOH + (n-1)H_2O$$

où x est la quantité d'eau nécessaire à l'hydratation de la zircone et n est la quantité d'eau ajoutée dans le but de diluer les effluents solubles. x est de l'ordre de 1 et n peut varier dans de larges limites, car rien n'empêche de travailler avec une extrême dilution des effluents solubles. Cependant, il y aura normalement avantage à limiter les volumes d'effluents en travaillant avec une quantité d'eau la plus faible possible qui soit compatible avec la mise en solution complète des effluents solubles et l'obtention de solutions stables à une température industriellement acceptable (inférieure à 60°C). Des solutions trop concentrées peuvent cristalliser spontanément au refroidissement ou au stockage. En pratique, n sera de préférence compris entre environ 2,5 et 10.

On obtient une suspension de zircone hydratée solide dans une solution de soude. En réglant la quantité d'eau d'hydrolyse, on peut obtenir une solution concentrée d'hydroxyde de sodium. Après séparation (étape (3)), par exemple par filtration ou essorage, la solution de soude peut être recyclée, si désiré, à la préparation de la zircone thermique, pour réaliser l'attaque sélective de la silice dans le zircon dissocié.

Compte tenu des proportions de soude solide ou en solution à chaque étape décrite ci-dessus, la solution de soude générée à ce niveau est en excès par rapport aux besoins dictés par la fabrication préalable de zircone thermique. Cet excès permettra de fabriquer de la zircone thermique pour des applications où elle peut être utilisée directement. En pratique, compte tendu des rendements, pour chaque tonne de zircone transformée sous forme hydratée ou pourra fabriquer de l'ordre de 100 kg de zircone thermique excédentaire.

La zircone hydratée obtenue dans l'étape (3) est encore chargée en $Na_2O$ après filtration et lavage à l'eau. Il reste en moyenne environ 7% en poids $Na_2O$ par rapport à la teneur en $ZrO_2$. Des lavages ultérieurs à l'eau, même prolongés, ne permettent plus d'abaisser cette teneur de façon très significative. Nous avons trouvé qu'un traitement (lavage) avec une solution d'un sel de base faible et d'acide fort à un pH 3 à 6 (de préférence de l'ordre de 5) permet d'extraire à grande vitesse cette soude résiduelle sans entraîner de dissolution notable de zircone hydratée en limitant les volumes de solution.

Les sels utilisés dans l'étape (4) sont avantageusement des sels d'ammonium (par exemple le chlorure, nitrate ou sulfate) ou de di- ou tri-alkyl ammonium comme les chlorures de diéthyl ou de triéthylammonium.

La réaction suivante est mise en jeu, dans le cas du chlorure d'ammonium :

$$NaOH + NH_4Cl \rightarrow NH_4OH + NaCl$$

On utilise de préférence une solution aqueuse à 50-150 g/l de chlorure d'ammonium. De façon générale, la concentration en ions ammonium est de 1 à 3 moles/litre pour une quantité de 3 à 5 moles d'ions ammonium par kg de zircone, et de préférence d'environ 4 moles/kg. Une température de 30 à 50°C et un temps de contact de 10 à 90 minutes sont, de préférence, utilisés en pratique.

L'ammoniaque formé lors du traitement est neutralisé au fur et à mesure par un ajout d'acide fort dilué, de préférence l'acide formant l'anion du sel. Cette opération vise à maintenir le pH dans la plage requise. Dans le cas du chlorure d'ammonium, on utilisera avantageusement de l'acide chlorhydrique ce qui produira la réaction :

$$NH_4OH + HCl \rightarrow NH_4Cl + H_2O$$

La suspension résultante est ensuite filtrée, la zircone hydratée purifiée est lavée à l'eau puis essorée (étape (5)). A ce stade elle contient typiquement.

```
ZrO₂     60 à 50%,     habituellement 55% et, de façon
                       complémentaire,

H₂O      40 à 50%,     habituellement 45%.
```

Elle contient aussi typiquement les impuretés suivantes, en % en poids par rapport à $ZrO_2$ :

$$SiO_2 \quad 0,1 \text{ à } 0,5\%, \quad \text{habituellement } 0,3\%$$
$$Na_2O \quad 0,1 \text{ à } 0,5\%, \quad \text{habituellement } 0,3\%$$
$$Al_2O_3 \quad 0,02 \text{ à } 0,10\%, \text{habituellement } 0,04\%$$
$$TiO_2 \quad 0,05 \text{ à } 0,25\%, \text{habituellement } 0,10\%$$
$$Fe_2O_3 \quad 0,02 \text{ à } 0,10\%, \text{habituellement } 0,04\%$$
$$CaO \quad 0,05\%$$
$$MgO \quad 0,01\%$$
$$P_2O_5 \quad 0,03\%$$

$Cl \qquad 0,04\%$ (dans le cas d'un lavage au chlorure d'ammonium).

Elle se présente sous la forme d'un solide humide granulaire dispersable dans l'eau, la granulométrie obtenue étant proche de celle de la zircone thermique utilisée comme matière de départ.

Nous avons également trouvé que, par ce procédé une zircone hydratée à faible teneur (0,01 à 0,1%) en anions résiduels pouvait être obtenue, diminuant ainsi d'autant les problèmes liés à leur dégagement.

Le présent procédé présente, par rapport au procédé usuel sus-mentionné, la particularité d'opérer la purification du zircon, c'est-à-dire l'élimination de la silice, en évitant la coexistence de la zircone hydratée et :
- de résidus de zircon non attaqué ou transformé,
- de solutions riches en silice, facilement adsorbées.

De ce fait, on évite la pollution de la zircone hydratée par des résidus que l'on ne sait éliminer que par une remise en solution.

Il présente en outre les avantages :

(1) de permettre une économie importante, d'un facteur de l'ordre de 2,9, de la consommation globale en soude lorsqu'on recycle l'hydroxyde de sodium séparé dans l'étape (3) à la fabrication de la zircone thermique. A titre indicatif on a enregistré une consommation de soude (pertes sous forme non recyclable) de l'ordre de 280 kg/tonne de zircone produite (exprimée sous la forme $ZrO_2$), soit 0,46 mole de NaOH/mole de $ZrO_2$, contre 2 moles engagées dans la réaction.

(2) Compte tenu du non recours à des sels de zirconium intermédiaires (oxychlorure, sulfate basique), la consommation d'acides forts concentrés (acide sulfurique, acide chlorhydrique) est quasi insignifiante. Seul un sel d'ammonium en solution diluée, dont le pH est maintenu constant par acidification par un acide (par exemple celui correspondant au sel d'ammonium utilisé), est nécessaire pour obtenir la pureté recherchée. De ce fait, les rejets sont limités, en quantité et en concentration, à une solution mixte sel de sodium-sel d'ammonium. Dans le cas du procédé courant, des solutions d'acide chlorhydrique plus sulfate de sodium et de sulfate d'ammonium sont générées.

L'exemple non limitatif suivant est donné afin d'illustrer le présent procédé.

## EXEMPLE :

L'oxyde de zirconium thermique utilisé a été obtenu par décomposition de zircon au plasma suivi d'une attaque dans une solution concentrée chaude d'hydroxyde de sodium. Ses propriétés sont les suivantes :
* Analyse chimique (% pondéraux)

$$SiO_2 = 0,40\%, \quad Na_2O = 0,08\%, \quad Al_2O_3 = 0,12\%$$
$$TiO_2 = 0,14\%, \quad Fe_2O_3 = 0,04\%$$

* Surface spécifique : 6,5 m$^2$/g
* Diamètre médian : 3,2 μm
On mélange 5kg de cet oxyde avec de l'hydroxyde de sodium sous forme de perles solides, à raison de 4,1 kg.

Le mélange est cuit dans un four électrique à 1000°C, maintenu pendant 4 heures à cette température, puis refroidi à la température ambiante.

On obtient 8,108 Kg d'un solide granulaire blanc. Par diffraction des rayons X, on ne décèle que la phase cristallisée $\alpha$-$Na_2ZrO_3$.

Ce solide est émotté à une granulométrie inférieure à 5 mm par passage à travers un tamis de maille correspondante.

Il est mis en contact avec 10,5 kg d'eau distillée dans un réacteur agité et maintenu à 60°C pendant 30 minutes.

On obtient une suspension de zircone hydratée dans une solution d'hydroxyde de sodium. Cette solution est éliminée par filtration et essorage.

On récupère ainsi 9,2 kg de solution de soude, avec une concentration massique de 30% NaOH environ qui peut être réutilisée pour la fabrication de zircone thermique. La consommation de soude est donc de 275 kg/tonne $ZrO_2$.

La zircone hydratée est lavée avec 5 kg d'eau puis elle est mise en suspension dans une solution de chlorure d'ammonium à 120 g/l. La quantité de solution de lavage est de 10 kg. La suspension est maintenue à 45°C pendant 40 minutes. Pendant la durée du repulpage on ajoute de l'acide chlorhydrique en solution à 10% afin de maintenir le pH vers 4 à 5, ce qui conduit à un ajout de 4 kg de solution d'acide.

La suspension est ensuite filtrée, essorée et la zircone hydratée est lavée avec 5 kg d'eau et essorée. Le produit final se présente sous la forme d'une masse humide granulaire d'un poids de 9,805 kg.

Ses caractéristiques sont les suivantes :

* Analyse chimique (% pondéraux)

$$SiO_2 = 0,20\% \qquad Na_2O = 0,20\% \qquad Al_2O_3 = 0,03\%$$
$$TiO_2 = 0,07\% \qquad Fe_2O_3 = 0,02\% \qquad H_2O = 49,0\%$$

La teneur en chlore est de 450 ppm.

* Diamètre médian : 5 $\mu$m.

* Teneur en $ZrO_2$ thermique non transformée : 2 %.

## Revendications

1. Procédé de préparation d'oxyde de zirconium hydraté à partir d'oxyde de zirconium (zircone) cristallisé granulaire obtenu par dissociation à haute température de zircon, éventuellement additionné d'oxyde de zirconium ou de silice, en oxyde de zirconium cristallisé et silice, suivie d'une attaque sélective de la silice par de l'hydroxyde de sodium, caractérisé en ce qu'il comprend les étapes suivantes :

(1) faire réagir ledit oxyde de zirconium critallisé granulaire avec une proportion au moins stoechiométrique d'hydroxyde de sodium solide à une température de 550 à 1400°C pour former du zirconate de sodium,

(2) hydrolyser le zirconate de sodium avec de l'eau de façon à produire une suspension d'oxyde de zirconium hydraté solide dans une solution aqueuse d'hydroxyde de sodium,

(3) séparer la majeure partie de ladite solution aqueuse d'hydroxyde de sodium de l'oxyde de zirconium hydraté,

(4) traiter l'oxyde de zirconium hydraté obtenu en (3), qui contient de l'hydroxyde de sodium résiduel, avec une solution aqueuse d'un sel d'ammonium d'un acide fort de manière à produire une base faible et un sel de sodium, et neutraliser, au fur et à mesure de sa formation, la base faible formée avec un acide fort, et

(5) séparer, laver à l'eau, puis essorer l'oxyde de zirconium hydraté purifié résultant de manière à obtenir ce dernier sous forme d'un solide granulaire, humide, dispersable dans l'eau.

2. Un procédé selon la revendication 1, caractérisé en ce que la proportion d'hydroxyde de sodium utilisée dans l'étape (1) est telle que le rapport pondéral $NaOH/ZrO_2$ soit compris entre 0,70 et 0,85.

3. Un procédé selon la revendication 1, caractérisé en ce que la durée de l'étape (1) est telle que le rendement de conversion de la zircone soit d'au moins 95%.

4. Un procédé selon la revendication 1, caractérisé en ce que, dans l'étape (2), on ajoute une proportion d'eau comprise entre 3,5 et 11 fois la proportion molaire de zirconate de sodium formé dans l'étape (1).

5. Un procédé selon la revendication 1 ou 4, caractérisé en ce que l'hydrolyse (2) est effectuée à une température de 30 à 90°C.

6. Un procédé selon la revendication 5, caractériszé en ce que l'hydrolyse (2) est effectuée à une température d'environ 60°C.

7. Un procédé selon la revendication 1, caractérisé en ce que l'hydrolyse de sodium séparé dans l'étape (3) est recyclé et utilisé pour l'attaque sélective de la silice du zircon thermiquement dissocié.

8. Un procédé selon la revendication 1, caractérisé en ce qu'on utilise, dans l'étape (4), un chlorure, nitrate ou sulfate d'ammonium ou de di- ou tri-alkyl ammonium.

9. Un procédé selon la revendication 1 ou 8, caractérisé en ce que la base faible formée est de l'hydroxyde d'ammonium et en ce que cette dernière est neutralisée par l'acide fort correspondant à l'anion du sel d'ammonium utilisé.

10. Un procédé selon l'une quelconque des revendications 1 à 9, caractérisé en ce qu'on substitue de l'hydroxyde de potassium ou de l'hydroxyde de lithium à l'hydroxyde de sodium.

## Patentansprüche

1. Verfahren zur Herstellung von hydratiertem Zirconiumoxid aus granuliertem kristallinem Zirconiumoxid (Zirconerde), welches durch Dissoziation von Zircon bei hoher Temperatur, gegebenenfalls unter Zugabe von Zirconiumoxid oder Kieselerde als kristallines Zirconiumoxid und Kieselerde erhalten wird, und einen nachfolgenden selektiven Angriff auf Kieselerde durch Natriumhydroxid, gekennzeichnet durch die folgenden Schritte:

(1) Bewirken einer Reaktion von granuliertem kristallinem Zirconiumoxid mit einem, mindestens stöchiometrischen Anteil von festem Natriumhydroxid bei einer Temperatur von 550 bis 1400°C zur Bildung von Natriumzirconat,

(2) Hydrolyse des Natriumzirconats mit Wasser, so daß eine Suspension von festem hydratiertem Zirconiumoxid in wäßriger Lösung von Natriumhydroxid gebildet wird,

(3) Abtrennen des größeren Teils der wäßrigen Lösung von Natriumhydroxid von dem hydratierten Zirconiumoxid,

(4) Behandeln des in (3) erhaltenen, hydratierten Zirconiumoxids, welches das restliche Natriumhydroxid enthält, mit einer wäßrigen Lösung eines Ammoniumsalzes einer starken Säure, so daß eine schwache Base und ein Natriumsalz gebildet werden, und Neutralisieren der gebildeten schwachen Base mit einer starken Säure in dem Maße wie sie gebildet wird, und

(5) Abtrennen, Waschen mit Wasser und anschließendes Trocknen des erhaltenen, gereinigten, hydratierten Zirconiumoxids, so daß letzteres in fest granulärer, feuchter, wasserlöslicher Form erhalten wird.

2. Verfahren nach Anspruch 1, dadurch gekennzeichnet, daß der Anteil des in Schritt (1) verwendeten Natriumhydroxids in einem Gewichtsverhältnis $NaOH/ZrO_2$ zwischen 0,70 und 0,85 vorliegt.

3. Verfahren nach Anspruch 1, dadurch gekennzeichnet, daß die Dauer des Schrittes (1) derart ist, daß die Ausbeute der Umwandlung von Zirconerde wenigstens 95 % beträgt.

4. Verfahren nach Anspruch 1, dadurch gekennzeichnet, daß in Schritt (2) ein Wasseranteil zwischen dem 3,5 und 11-fachen des molaren Anteils des in Schritt (1) gebildeten Natriumzirconats hinzugegeben wird.

5. Verfahren nach Anspruch 1 oder 4, dadurch gekennzeichnet, daß die Hydrolyse (2) bei einer Temperatur von 30 bis 90°C durchgeführt wird.

6. Verfahren nach Anspruch 5, dadurch gekennzeichnet, daß die Hydrolyse (2) bei einer Temperatur von etwa 60°C durchgeführt wird.

7. Verfahren nach Anspruch 1, dadurch gekennzeichnet, daß das in Schritt (3) abgetrennte Natriumhydroxid wiedergewonnen und verwendet wird für den selektiven Angriff auf Kieselerde aus dem thermisch dissoziierten Zircon.

8. Verfahren nach Anspruch 1, dadurch gekennzeichnet, daß in Schritt (4) ein Ammonium oder Di- oder Tri-alkyl ammonium-chlorid, -nitrat oder -sulfat verwendet wird.

9. Verfahren nach Anspruch 1 oder 8, dadurch gekennzeichnet, daß die gebildete schwache Base Ammoniumhydroxid ist, und daß letztere mit einer starken Säure, die einem Anion des verwendeten Ammoniumsalzes entspricht, neutralisiert wird.

10. Verfahren nach einem der Ansprüche 1 bis 9, dadurch gekennzeichnet, daß Kaliumhydroxid oder Lithiumhydroxid an die Stelle von Natriumhydroxid gesetzt wird.

## Claims

1. Process for the preparation of zirconium oxide hydrate from granular crystallised zirconium oxide (zirconia) obtained by dissociation of zircon at high temperature, with the optional addition of zirconium oxide or of silica, as crystallised zirconium oxide and silica, followed by a selective digestion of the silica with sodium hydroxide, characterised in that it comprises the following steps:

(1) reacting the said granular crystallised zirconium oxide with an at least stoichiometric proportion of solid sodium hydroxide at a temperature of 550 to 1,400°C to form sodium zirconate,

(2) hydrolysing the sodium zirconate with water so as to produce a suspension of solid zirconium oxide hydrate in an aqueous solution of sodium hydroxide,

(3) separating most of the said aqueous solution of sodium hydroxide from the zirconium oxide hydrate,

(4) treating the zirconium oxide hydrate obtained in (3), which contains residual sodium hydroxide, with an aqueous solution of an ammonium salt of a strong acid, so as to produce a weak base and a sodium salt, and neutralising, as it is being formed, the weak base formed with a strong acid, and

(5) separating, washing with water and then dewatering the resulting purified zirconium oxide hydrate so as to obtain the latter in the form of a water-dispersible, moist, granular solid.

2. Process according to Claim 1, characterised in that the proportion of sodium hydroxide employed in step (1) is such that the weight ratio $NaOH/ZrO_2$ is between 0.70 and 0.85.

3. Process according to Claim 1, characterised in that the duration of step (1) is such that the zirconia conversion efficiency is at least 95%.

4. Process according to Claim 1, characterised in that, in step (2), a proportion of water of between 3.5 and 11 times the molar proportion of sodium zirconate formed in step (1) is added.

5. Process according to Claim 1 or 4, characterised in that the hydrolysis (2) is performed at a temperature of 30 to 90°C.

6. Process according to Claim 5, characterised in that the hydrolysis (2) is performed at a temperature of approximately 60°C.

7. Process according to Claim 1, characterised in that the sodium hydroxide separated in step (3) is recycled and employed for the selective digestion of silica in the thermally dissociated zircon.

8. Process according to Claim 1, characterised in that an ammonium or di- or trialkylammonium chloride, nitrate or sulphate is employed in step (4).

9. Process according to Claim 1 or 8, characterised in that the weak base formed is ammonium hydroxide and in that the latter is neutralised with the strong acid corresponding to the anion of the ammonium salt employed.

10. Process according to any one of Claims 1 to 9, characterised in that potassium hydroxide or lithium hydroxide is substituted for sodium hydroxide.